# EUROPEAN PATENT APPLICATION

(11) **EP 1 180 533 A1**
(43) Date of publication of application: **20.02.2002**
(21) Application number: 00116284.1
(22) Date of filing: 10.08.2000
(51) Int. Cl.: C08K 5/00

(54) **Thermoplastic hydrophilic, polymeric compostions with improved adhesive properties for moisture vapour permeable structures**

(71) Applicant: The Procter & Gamble Company, Cincinnati, Ohio 45202 (US)
(72) Inventor: Corzani, Italo, 66100 Chieti (IT); Russo, Elisabetta, 00142 Roma (IT)
(74) Representative: Veronese, Pancrazio

(57) **Abstract**

The present invention relates to thermoplastic hydrophilic polymeric compositions for making a liquid impermeable moisture vapour permeable structure, for example by forming the composition into a layer or film. The thermoplastic compositions comprise preferred thermoplastic polymers and suitable hydrophilic tackifying resins that provide the thermoplastic hydrophilic composition with a desired adhesiveness or tackiness level, without impairing the moisture vapour permeability of films or layers made from the thermoplastic hydrophilic polymeric compositions. The layers made from the thermoplastic hydrophilic polymeric compositions of the present invention can find a variety of applications wherein liquid imperviousness and moisture vapour permeability are desirable.

## Description

### Field of the Invention

The present invention relates to thermoplastic hydrophilic polymeric compositions for making a moisture vapour permeable, liquid impermeable structure, for example by forming the composition into a moisture vapour permeable, liquid impermeable layer such as a film. The compositions of the present invention can find a variety of applications wherein moisture vapour permeability is desirable.

### Background of the Invention

Thermoplastic films which provide a liquid barrier in addition to providing moisture vapour permeability are known in the art. Particularly preferred are hydrophilic continuous films that do not allow the flow of moisture vapour through open pores or apertures in the material, but do transfer substantial amounts of moisture vapour through the film by absorbing water on one side of the film where the moisture vapour concentration is higher, and desorbing or evaporating it on the opposite side of the film where the moisture vapour concentration is lower. Such films are typically formed from a thermoplastic polymeric composition comprising a thermoplastic hydrophilic polymer, or a blend of thermoplastic hydrophilic polymers. Thermoplastic hydrophilic polymeric compositions having the above described characteristics are also known in the art as "monolithic compositions", and the moisture vapour permeable, liquid impermeable layers or films made therefrom are known as "monolithic layers" or "monolithic films".

For example WO 95/16746 discloses films prepared from mixtures of a) block copolyether ester, block copolyether amides (e.g. Pebax™) and or polyurethane and b) thermoplastic polymer which is incompatible with a, and c) a compatibiliser. The films are liquid impermeable and have moisture vapour permeability of about 700 g/m²·day. Also, US 5,447,783 discloses a vapour permeable water resistant multi component film structure having at least three layers. The outer layers are hydrophobic copolyetherester elastomers having a thickness of 1.3-7.6 micrometers and a WVTR of 400-2500 g/m²·24h and the inner layer is a hydrophilic copolyetherester elastomer having a thickness of 7.6 - 152 micrometers and a WVTR of at least 3500 g/m²·24h.

US 5,445,875 discloses a waterproof, bloodproof and virusproof breathable laminate. The laminate comprises a woven/nonwoven fabric and an extruded film such as Hytrel™ having a thickness of about 1mil (25.4 micrometers).

US 5,532,053 discloses a high moisture transmission medical film which can be laminated onto a nonwoven material. The laminate film comprises a first layer of polyetherester copolymer and second and third layers selected from a specified group of polymers. The film has a MVTR of greater than 750 g/m²·24h (ASTM F1249) and a thickness of less than 1 mil (25.4 micrometer) preferably 0.6 mil to 0.75 mil (15-19 micrometers).

US 4,938,752 discloses absorbent articles comprising films of copolyether esters which have reduced water permeability, a water vapour permeability of 500 g/m²·24h (as measured in a specified described test) and a thickness of 5-35 micrometers. There is no disclosure of a supportive substrate.

US 4,493,870 discloses a flexible layered waterproof product comprising a textile material covered with a film of a copolyetherester having an MVTR of at least 1000 g/m²·24h (ASTM E96- 66) having a thickness of 5 to 35 micrometers.

GB 2024100 discloses a flexible layered water resistant article comprising a microporous hydrophobic outer layer which is moisture vapour permeable but resist liquids and a hydrophilic inner layer of polyetherpolyurethane having a MVTR of above 1000 g/m²·24h.

As shown in the above cited prior art documents, a preferred use of known thermoplastic hydrophilic polymeric compositions ("monolithic compositions") for making moisture vapour permeable, liquid impermeable layers, is in the manufacture of moisture vapour permeable, liquid impermeable composite structures wherein one or more layers of the thermoplastic hydrophilic polymeric composition are connected to one or more different substrates, for example a fibrous layer such as a nonwoven fabric.

The connection between the different layers can be achieved with any known bonding means, for example by using an adhesive, or by means of heat and pressure, such as for example by heat bonding. These known methods are however not preferred since, for example, bonding by means of adhesive implies the addition of a further layer to the laminate structure, which may not be desirable in terms of cost, ease of manufacture, and of overall breathability of the resulting structure. Means involving heat and pressure on the other hand can be detrimental for the integrity of the layer formed from the thermoplastic hydrophilic polymeric composition, possibly modifying its moisture vapour permeability, and even more likely influencing the liquid impermeability, e.g. by forming discontinuities or even apertures in the layer.

Direct bonding of moisture vapour permeable, liquid impermeable layers formed from the thermoplastic hydrophilic polymeric compositions as described above to a suitable substrate, e.g. a nonwoven layer in order to form an e.g. composite layered structure, is therefore preferred. It is typically achieved by making use of the intrinsic tackiness of the thermoplastic polymeric composition when in molten or semi-molten or plastic state, for example by extruding a film made of the thermoplastic hydrophilic polymeric composition directly onto the substrate, or by hot-melt coating, that is by coating the substrate with a layer of the thermoplastic hydrophilic polymeric composition typically in a low viscosity molten state. Suitable methods, particularly for hot melt coating, are for example referred to in patent applications WO 99/64077 or WO 99/64505, where thermoplastic hydrophilic polymeric compositions for moisture vapour permeable, liquid impermeable structures are disclosed, which have a low viscosity and are particularly suitable for hot melt coating processes.

However, hydrophilic polymers comprised in thermoplastic hydrophilic polymeric compositions ("monolithic compositions") for making moisture vapour permeable, liquid impermeable structures, typically have a polar character and do not have a good adhesion, when in plastic, semi-molten, and even when in completely molten state, onto many substrates, especially non polar substrates such as for example most nonwovens made of synthetic, non polar polymeric fibres, which are preferred in the manufacture of moisture vapour permeable, liquid impermeable composite structures comprising at least a monolithic layer or film combined with at least a suitable fibrous substrate.

Addition of suitable tackifying resins is generally known in the art in order to provide thermoplastic polymeric compositions, and particularly thermoplastic hydrophilic polymeric compositions, with a desired degree of adhesiveness or tackiness, for example in the molten, semi-molten or plastic state in order to improve direct bonding of the composition onto a substrate, such as a fibrous nonwoven substrate, e.g. in the manufacture of composite structures by direct formation and bonding of a film or layer of the thermoplastic hydrophilic polymeric composition onto the substrate as described above. Tackifying resins can also be added to impart permanent adhesiveness to a thermoplastic polymeric composition in the stable state at room temperature.

A problem with the addition of known tackifying resins to thermoplastic hydrophilic polymeric compositions for moisture vapour permeable, liquid impermeable structures, is that while this addition is effective in imparting the desired degree of adhesiveness or tackiness to the composition, e.g. in the molten, semi-molten or plastic state, it is also detrimental to the breathability of the layer or film formed from the composition itself. In other words, addition of known tackifying resins to the thermoplastic hydrophilic polymeric composition dramatically decreases the capability of the "monolithic" layer or film formed from that composition of transmitting moisture vapour through its thickness.

It is therefore an object of the present invention to provide thermoplastic hydrophilic polymeric compositions for moisture vapour permeable, liquid impermeable structures, which have the desired degree of adhesiveness or tackiness, e.g. in the molten, semi-molten, or plastic state, but also in the stable state at room conditions, i.e. as permanent tackiness, by the addition of a suitable tackifying resin, or blend of tackifying resins, while at the same time said thermoplastic hydrophilic polymeric compositions also have better characteristics of moisture vapour permeability.

It has been surprisingly discovered that this can be achieved by selecting, for said thermoplastic hydrophilic polymeric composition, a tackifying resin or a blend of tackifying resins having a preferred high polar character. The polar character is measured by means of a suitable polarity parameter.

A suitable polarity parameter for a given substance can be selected among a number of parameters which are well known in the scientific literature, and are measurable according to known methods. A polarity parameter can be for example the water absorption at equilibrium of that substance, or the Hildebrand solubility parameter, or the contact angle with water, or the dual contact angle.It has been discovered that the equilibrium contact angle with water measured according to the method described herein is a particularly preferred polarity parameter for measuring the polar character of the tackifying resins according to the present invention.

### Summary of the Invention

The present invention relates to a thermoplastic hydrophilic polymeric composition for making a moisture vapour permeable, liquid impervious structure. The composition comprises:
a thermoplastic hydrophilic polymer or a mixture of thermoplastic hydrophilic polymers selected from the group consisting of polyurethanes, poly-ether-amides block copolymers, polyethylene-acrylic acid and polyethylene-methacrylic acid copolymers, polyethylene oxide and its copolymers, ethylene acrylic esters and ethylene methacrylic esters copolymers, poly lactide and copolymers, polyamides, polyesters and copolyesters, polyester block copolymers, sulfonated polyesters, poly-ether-ester block copolymers, poly-ether-ester-amide block copolymers, polyacrylates, polyacrylic acids and derivatives, ionomers, polyethylene-vinyl acetate with a vinyl acetate content of more than 28% by weight, polyvinyl alcohol and its copolymers, polyvinyl ethers and their copolymers, poly-2-ethyl-oxazoline and derivatives, polyvinyl pyrrolidone and its copolymers, thermoplastic cellulose derivatives, poly-caprolactone and copolymers, poly glycolide, polyglycolic acid and copolymers, polylactic acid and copolymers, polyureas, or mixtures thereof, and either
a compatible hydrophilic tackifying resin having an equilibrium contact angle with water not greater than 86 degrees, preferably not greater than 84 degrees, more preferably not greater than 82 degrees, as measured according to the Equilibrium Contact Angle Measuring Test described herein, or alternatively
a blend of compatible hydrophilic tackifying resins, wherein the blend of compatible hydrophilic tackifying resins comprises at least 50% by weight of a tackifying resin or resins having an equilibrium contact angle with water not greater than 86 degrees, preferably not greater than 84 degrees, more preferably not greater than 82 degrees, as measured according to the Equilibrium Contact Angle Measuring Test described herein.

### Detailed Description of the Invention

According to the present invention, the thermoplastic polymeric hydrophilic composition for making a moisture vapour permeable, liquid impervious structure at least comprises a thermoplastic hydrophilic polymer or a mixture of thermoplastic hydrophilic polymers, and a suitable compatible hydrophilic tackifying resin, or a blend of suitable compatible hydrophilic tackifying resins, in order to provide said thermoplastic polymeric hydrophilic composition with a desired degree of adhesiveness or tackiness in the molten, semi-molten, or plastic state, and/or in the stable state at room temperature.

In the following description the terms "adhesiveness" and "tackiness" are considered to be synonymous.

The terms "breathable" and "breathability" are intended herein to correspond to "moisture vapour permeable" or "water vapour permeable", and "moisture vapour permeability" or "water vapour permeability", referred to "monolithic compositions" and "monolithic layers or films" as defined in the Background of the Invention. "Moisture vapour" and "water vapour" are also considered to be equivalent.

Suitable thermoplastic hydrophilic polymers comprised in the composition according to the present invention include polyurethanes, poly-ether-amides block copolymers, polyethylene-acrylic acid and polyethylene-methacrylic acid copolymers, polyethylene oxide and its copolymers, ethylene acrylic esters and ethylene methacrylic esters copolymers, poly lactide and copolymers, polyamides, polyesters and copolyesters, polyester block copolymers, sulfonated polyesters, poly-ether-ester block copolymers, poly-ether-ester-amide block copolymers, polyacrylates, polyacrylic acids and derivatives, ionomers, polyethylene-vinyl acetate with a vinyl acetate content of more than 28% by weight, polyvinyl alcohol and its copolymers, polyvinyl ethers and their copolymers, poly-2-ethyl-oxazoline and derivatives, polyvinyl pyrrolidone and its copolymers, thermoplastic cellulose derivatives, poly-caprolactone and copolymers, poly glycolide, polyglycolic acid and copolymers, polylactic acid and copolymers, polyureas, and mixtures thereof.

Particularly preferred thermoplastic hydrophilic polymers are thermoplastic poly-ether-amide block copolymers (e.g. Pebax™), thermoplastic poly-ether-ester-amide block copolymers, thermoplastic polyester block copolymers (e.g. Hytrel™), thermoplastic polyurethanes, typically non reactive polyurethanes (e.g. Estane™), or mixtures thereof.

The hydrophilic tackifying resin comprised in the thermoplastic hydrophilic polymeric compositions according to the present invention must have a high polar character, wherein said polar character is measured and expressed by means of a suitable polarity parameter.

When alternatively a blend of hydrophilic tackifying resins is comprised in the thermoplastic hydrophilic polymeric compositions of the present invention, said blend must comprise at least 50% by weight of a tackifying resin or resins having said high polar character. Preferably each hydrophilic tackifying resin of the blend has said high polar character.

A suitable polarity parameter can be selected among parameters known in literature which are useful to give a measure of the polar character of a substance, for example in terms of its hydrophilicity or of its solubility, typically in water, measured by means of suitable test methods. For example, known polarity parameters suitable for measuring the polar character of a substance in the context of the present invention comprise the water absorption at equilibrium, or the Hildebrand solubility parameter, or the contact angle with water, or the dual contact angle, which parameters are well known in physical chemistry and are measurable according to known methods which can be found in the scientific and technical literature.

It has been discovered that a particularly suitable polarity parameter for measuring the polar character of a tackifying resin according to the present invention is the equilibrium contact angle with water of the hydrophilic tackifying resin, measured according to the Equilibrium Contact Angle Measuring Test method described herein. The equilibrium contact angle with water actually gives a measure of the hydrophilicity of a substance in terms of the interaction between that substance and a drop of water at a common interface.

According to the present invention, the hydrophilic tackifying resin has the required high polar character according to the present invention if it has an equilibrium contact angle with water not greater than 86 degrees, preferably not greater than 84 degrees, more preferably not greater than 82 degrees, as measured according to the Equilibrium Contact Angle Measuring Test described herein.

Alternatively, if a blend of compatible hydrophilic tackifying resins is comprised in the thermoplastic hydrophilic polymeric composition of the present invention, said blend must comprise at least 50% by weight of a tackifying resin or resins having an equilibrium contact angle with water not greater than 86 degrees, preferably not greater than 84 degrees, more preferably not greater than 82 degrees, as measured according to the Equilibrium Contact Angle Measuring Test described herein.

Preferably however, each compatible hydrophilic tackifying resin of such a blend should have the required high polar character expressed in terms of its preferred equilibrium contact angle with water as explained above.

Suitable compatible hydrophilic tackifying resins, or blends of hydrophilic tackifying resins, having the required high polar character compatible with the thermoplastic hydrophilic polymer or mixture of thermoplastic hydrophilic polymers according to the present invention can be selected by the man skilled in the art among available tackifying resins by measuring the value of the respective polarity parameter, namely the equilibrium contact angle with water as explained above, and according to the test method described herein. Suitable resins are for example the tackifying resins produced by Hercules Inc. and available under the codes Res A-2690, Res A-2691, Res A-2682, Res A-2683, Res A-2698.

The selected preferred hydrophilic tackifying resin or blend of hydrophilic tackifying resins having high polar character comprised in the thermoplastic hydrophilic polymeric compositions of the present invention are generally such that, when such a hydrophilic tackifying resin is added at a level of 30% by weight to a pure thermoplastic hydrophilic polymer to form a two component thermoplastic hydrophilic polymeric composition, the water vapour transmission rate (WVTR) of a 50 µm thick continuous film formed from the thermoplastic hydrophilic polymeric composition constituted by the hydrophilic tackifying resin and the hydrophilic polymer is at least 40%, preferably at least 50%, more preferably at least 60% of the WVTR value of of a 50 µm thick continuos film made of the pure hydrophilic polymer and not comprising the tackifying resin, wherein the WVTR values are measured according to the modified ASTM E-96 "Upright Cup" Method. 30% by weight corresponds to a typical average addition level for a tackifying resin in the thermoplastic hydrophilic polymeric compositions of the present invention.

Preferably the thermoplastic hydrophilic polymeric compositions according to the present invention comprise a blend of hydrophilic tackifying resins, more preferably with each resin of the blend being selected by means of the polarity parameter satisfying the conditions as described above, wherein the blend comprises at least a hydrophilic tackifying resin which is liquid at room temperature, since this is beneficial to the processability of the thermoplastic hydrophilic polymeric composition. Preferably not all the tackifying resins of such a blend are however liquid at room temperature.

By saying "a tackifying resin liquid at room temperature" it is herein meant a tackifying resin having a softening point below 25°C, wherein said softening point is evaluated according to the Ring and Ball Method ASTM E 28-67. Conversely a tackifying resin which is solid at room temperature is a resin having a softening point above 25°C. A temperature of 25°C has been considered in this context to conventionally correspond to the "room temperature".

The thermoplastic hydrophilic polymers or mixture of thermoplastic hydrophilic polymers as mentioned above, comprised in the thermoplastic hydrophilic polymeric composition of the present invention, can be typically highly viscous in the molten state at the process conditions that are typical of the known processes of film or layer formation, e.g. an extrusion process involving a high power screw extruder. For example they may have a viscosity higher than 5000 poise at a temperature of 20°C above the DSC (Differential Scanning Calorimetry) melting point, which is the temperature identified as that corresponding to the DSC peak, or corresponding to the highest DSC peak in case of a mixture of polymers showing more than one peak, and at a frequency of 1 rad/sec.

The thermoplastic hydrophilic polymeric compositions of the present invention, comprising the thermoplastic hydrophilic polymer(s) and the compatible hydrophilic tackifying resin(s), can therefore still be highly viscous in the molten state at the process conditions.

According to a preferred embodiment of the present invention, and as disclosed in our patent applications WO 99/64077 or WO 99/64505, the viscosity of the thermoplastic polymeric hydrophilic compositions of the present invention can be optionally preferably adjusted by including in the thermoplastic hydrophilic polymeric composition a suitable plasticiser, or blend of plasticisers, that is also compatible with the thermoplastic hydrophilic polymer or polymers and with the hydrophilic tackifying resin or resins and that lowers the viscosity of the thermoplastic hydrophilic polymeric composition in the molten state at the process conditions.

Viscosity of the thermoplastic hydrophilic polymeric compositions of the present invention can therefore be adjusted by suitably selecting the plasticiser, depending on how the composition is to be processed. For example film extrusion techniques can be suitably used with compositions having higher viscosity at the process conditions, as it is known in the art. Alternatively, suitable hot melt coating processes can be preferred to process the compositions, as explained in the above mentioned patent applications WO 99/64077 and WO 99/64505. This implies that the viscosity in the thermoplastic hydrophilic polymeric composition at the process conditions has to be adjusted at a suitable lower level.

In such a case, the thermoplastic polymeric hydrophilic compositions of this alternative embodiment of the present invention comprise a suitable plasticiser or blend of plasticisers such that they preferably have the following complex viscosities (η* ):

50 poise < η* < 4000 poise, preferably 100 poise < η* < 2000 poise, more preferably 100 poise < η* < 1000 poise, at a frequency of 1 rad/s at a temperature of 210°C or less and η* < 2000 pose, preferably η* < 1000 poise, more preferably η* < 500 poise, at a frequency of 1000 rad/s at a process temperature (T) of 210°C or less, wherein η* represents the complex viscosity of the thermoplastic polymeric hydrophilic composition. Preferably the temperature T is 200°C or less and more preferably 180°C or less and most preferably from 200°C to 50°C.

According to this preferred embodiment of the present invention the thermoplastic hydrophilic polymeric compositions having the complex viscosity described above allow for a film or layer to be coated onto a substrate using typical coating conditions and apparatuses known in the art for the coating of low viscosities hot melt compositions in a layer having a required thickness onto a substrate, while also keeping the advantageous characteristics of the preferred thermoplastic hydrophilic polymers in providing hydrophilic continuous moisture vapour permeable, liquid impermeable layers or films.

Thermoplastic hydrophilic polymeric compositions having such viscosities can also provide very thin films or layers.

Suitable compatible plasticisers comprised in the thermoplastic hydrophilic polymeric composition according to this preferred embodiment of the present invention include citric acid esters, tartaric acid esters, glycerol and its esters, sucrose esters, adipates, sebacates, sorbitol, epoxidized vegetal oils, polymerised vegetal oils, polyols, phthalates, liquid polyesters, glycolates, p-toluene sulfonamide and derivatives, glycols and polyglycols and their derivatives, sorbitan esters, phosphates, monocarboxylic fatty acids (C₈-C₂₂) and their derivatives, and mixtures thereof.

According to a particularly preferred embodiment of the present invention particularly preferred plasticisers are hydrophilic plasticisers such as acids, esters, amides, alcohols, polyalcohols, or mixtures thereof, as disclosed in our application WO 99/64505. Said particularly preferred hydrophilic plasticisers have a particularly high polar character and provide the further advantage that they do not impair, and possibly can even enhance, the moisture vapour permeability of the resulting layer or film formed from the preferred thermoplastic hydrophilic polymeric composition of the present invention comprising said plasticiser or blend of plasticisers, when compared to a corresponding film or layer formed from a thermoplastic hydrophilic polymeric composition comprising the same components, but without the plasticiser or plasticisers.

The particularly preferred hydrophilic plasticiser or blend of hydrophilic plasticisers can of course also adjust the viscosity of the thermoplastic composition according to a preferred embodiment of the present invention to the preferred values in order to make it processable by coating said thermoplastic composition onto a substrate in a layer or film having a desired thickness.

Suitable preferred hydrophilic plasticisers according to this preferred embodiment of the present invention comprise acids, esters, amides, alcohols, polyalcohols, or mixtures thereof, wherein particularly preferred hydrophilic plasticisers are citric acid esters, tartaric acid esters, glycerol and its esters, sorbitol, glycolates, and mixtures thereof.

A suitable polarity parameter, such as one of those described above, can also be used in order to select the other components of the thermoplastic polymeric hydrophilic compositions of the present invention. Particularly, preferred thermoplastic hydrophilic polymers and, optionally, preferred compatible hydrophilic plasticisers can be selected for the thermoplastic polymeric hydrophilic compositions of the present invention by means of a suitable polarity parameter according to the same principles already explained with reference to the compatible hydrophilic tackifying resins. A same polarity parameter can be used to select different components of the thermoplastic hydrophilic polymeric compositions of the present invention, or alternatively different polarity parameters for different components, as can be determined by the man skilled in the art.

Preferably the thermoplastic polymeric hydrophilic composition of the present invention comprises from 10% to 99%, preferably from 20% to 70%, more preferably from 30% to 50%, by weight of the thermoplastic polymeric hydrophilic composition, of the thermoplastic hydrophilic polymer or mixture of thermoplastic hydrophilic polymers, and from 1% to 90%, preferably from 10% to 70%, more preferably from 20% to 50%, by weight of the thermoplastic hydrophilic composition, of the suitable compatible hydrophilic tackifying resin or blend of hydrophilic tackifying resins.

More preferably the thermoplastic polymeric hydrophilic composition of the present invention also comprises from 0% to 95%, preferably from 10% to 70%, more preferably from 20% to 50% by weight of the thermoplastic polymeric hydrophilic composition, of a suitable compatible plasticiser or blend of suitable compatible plasticisers.

The thermoplastic hydrophilic polymeric compositions of the present invention may in addition comprise additional optional components to further improve the processibility of the compositions and also the mechanical characteristics as well as other characteristics as resistance to ageing by light and oxygen, visual appearance etc., of the films or layers formed from such thermoplastic hydrophilic polymeric compositions.

A thermoplastic hydrophilic polymeric composition according to the present invention can be manufactured with any known process that will typically comprise the steps of providing at least the thermoplastic hydrophilic polymer or mixture of polymers and the suitable compatible hydrophilic tackifying resin or blend of compatible hydrophilic tackifying resins, and optionally any further additional components as explained above, such as for example a plasticiser or blend of plasticisers, heating the components and compounding them, e.g. with a known suitable mixer to form the thermoplastic hydrophilic polymeric composition in the molten state for subsequent process steps.

Alternatively, solvent or emulsion systems can be created and used to process the thermoplastic hydrophilic polymeric compositions of the present invention, either as intermediate or final step in making moisture vapour permeable, liquid impermeable structures from said compositions, and articles comprising said structures.

According to the present invention a moisture vapour permeable, liquid impervious layer can be formed from the thermoplastic hydrophilic polymeric composition of the present invention, for example by laying said thermoplastic hydrophilic polymeric composition onto a substrate. The films or layers formed from the thermoplastic compositions of the present invention preferably have a moisture vapour transmission rate of at least 400 g/m²·24h, more preferably of at least 500 g/m²·24h, even more preferably of at least 600 g/m²·24h, most preferably of at least 1000 g/m²·24h, with a thickness of said layer or film of at least 40 µm, said water vapour transmission rate measured according to the modified ASTM E-96 "Upright Cup" Method. More preferably, the films or layers as described above have the above preferred WVTR levels wherein the thermoplastic hydrophilic polymeric composition comprises at least 30% by weight of the hydrophilic tackifying resin, or of a blend of hydrophilic tackifying resins, according to the present invention.

According to the present invention, films or layers can be formed from the thermoplastic hydrophilic polymeric compositions described so far which have a thickness of from about 0.5 µm to about 200 µm and above, said films or layers being usable as such, or in combination with different substrates, such as for example in a layered structure comprising a nonwoven fibrous substrate.

More in general, the thickness of the structures formed from the thermoplastic hydrophilic polymeric compositions of the present invention can be constant or vary within the structure. Though not limited to any specific thickness range, depending upon application there may be preferred ranges. For example, the preferred range for a structure comprised in a disposable article may desirously range from as thick as 400 microns down to less than 0.5 microns and more preferably, in certain cases, substantially less than 0.5 microns. In contrast, a construction or even packaging application may, for certain reasons, dictate a preferred range from 200 to 2000 microns or even thicker for the structure.

A process for making a layer or film from a thermoplastic polymeric hydrophilic composition according to the present invention typically comprises the steps of providing said composition, heating it to make it flowable, and forming said composition in the molten, semi-molten, or plastic state onto a substrate in a layer or film having the desired thickness, e.g. with a film extrusion process, or with a hot melt coating process, depending on the viscosity achieved for the composition at the process conditions, as explained above. While in principle said substrate can be simply a formation substrate, onto which the thermoplastic hydrophilic polymeric composition is formed in order to make a film or layer of the desired thickness which is subsequently separated from said substrate and used as such, in a preferred embodiment of the present invention a moisture vapour permeable, water impervious composite structure can be formed which comprises the thermoplastic hydrophilic polymeric composition and a suitable substrate onto which said thermoplastic composition is laid, wherein the substrate is also preferably moisture vapour permeable. The preferred adhesiveness or tackiness imparted to the thermoplastic hydrophilic polymeric composition of the present invention by the addition of the compatible hydrophilic tackifying resin or blend of hydrophilic tackifying resins in fact typically provides for an increased adhesion of the film or layer in the molten, semi-molten, or plastic state to the substrate, for example a fibrous substrate such as a nonwoven layer comprising hydrophobic synthetic fibres, while at the same time keeping a high breathability of the film or layer, and hence preferably of the whole layered structure.

This in turn provides a better integrity of the resulting composite structure, which is therefore more resistant to e.g. delamination in use, also with very thin layers of the thermoplastic hydrophilic polymeric composition, wherein said improved adhesive properties of the composition and said better resistance of the resulting composite structure are combined with a very limited, or no detrimental effect at all on the water vapour transmission capability of the layer formed from the thermoplastic hydrophilic polymeric composition of the present invention, for example if compared to a layer of the same thickness formed from a similar composition, not comprising the hydrophilic tackifying resin or blend of hydrophilic tackifying resins of the present invention. Particularly preferred hydrophilic tackifying resins according to the present invention can also increase the water vapour transmission rate of a layer formed from the thermoplastic hydrophilic polymeric composition of the present invention, when compared to a layer of the same thickness formed from a similar composition, not comprising the hydrophilic tackifying resin or blend of hydrophilic tackifying resins of the present invention.

Other known processes can be used for making moisture vapour permeable, liquid impermeable structures, not limited to films and layers, from the thermoplastic hydrophilic polymeric compositions of the present invention, and articles comprising said structures.

A class of such methods is generally described as "moulding" where the material is often shaped via use of male or female moulds or combinations of moulds. Depending on the technique, certain processing temperature and pressure (or vacuum) conditions may be preferred for production of a given structure or article. Such known moulding methods include, but are not limited to: dip moulding, blow moulding, injection moulding, compression moulding, thermoforming, vacuum thermoforming, extrusion moulding, rotational moulding, slush moulding, etc.

Other known methods for processing the thermoplastic hydrophilic polymeric compositions of the present invention also include: film and sheet casting; blown film techniques; an additional tentering process step; an additional calendering step; an additional quenching step; an additional heat treatment step; etc. The nature of the specific production conditions or type or order of process steps will vary depending on the chosen making technique, environmental condition, material format, etc. For example, a process step may need to be included to remove: (i) solvent if a solvent-based format of the raw material form of the thermoplastic hydrophilic polymeric composition is chosen; (ii) water if an emulsion-based format of the raw material form of the thermoplastic hydrophilic polymeric composition is chosen; or, (iii) heat if a hot melt format of the raw material form of the thermoplastic hydrophilic polymeric composition is chosen.

A film or sheet can be produced with two or more layers where at least one of the layers comprises the thermoplastic hydrophilic polymeric composition of this invention. This can be accomplished by a variety of known means, including but not limited to: co-extrusion, extrusion coating, etc.

While it may be at times preferable that the entire structure or article be comprised solely of the thermoplastic hydrophilic polymeric composition of the present invention, the structure or the article can be a composite with one or more other materials. The composite, for example, can involve two or more components of the specific thermoplastic hydrophilic polymeric composition of the present invention or different specific thermoplastic hydrophilic polymeric compositions of the present invention.

Alternatively, the composite can involve at least one component of the thermoplastic hydrophilic polymeric composition in combination with one or more other materials. Such materials include, but are not limited to: fibres, fibrous batts, non-wovens, wovens, papers, metal foils, micro-porous or porous membranes, films such as polymeric films, inorganic structures such as compressed gypsum sheets, perforated or apertured films and papers, macroscopically expanded films, cloth, substantially rigid fibre-based materials such as lumber, etc.

Said other components may be non-absorbent, absorbent, liquid-containing, etc.

The thermoplastic hydrophilic polymeric compositions of the present invention can also be manufactured as a foam, including closed cell foams, with known means, for example to form cellular foam structures.

Another useful technique is the process of spray coating. The thermoplastic hydrophilic polymeric composition of this invention lends itself to a heated spraying technique whereas upon heating the viscosity is sufficiently lowered to allow spray coating or sputtering. Such thermoplastic hydrophilic polymeric composition spray coating can occur with the aid of a mould, either male or female, to build surfaces or walls of the article. Afterward, the article and mould (or mould parts) are separated from each other. Alternately, the spray coating method can employ different starting raw material formats of the polymer composition such as a solvent-based approach or an emulsion.

For a composite article comprising the thermoplastic hydrophilic polymeric composition of the present invention, and employing the spray coating approach, the other material may provide sufficient three dimensional structure by itself such that the other material acts as the mould, after which it is sufficiently coated the composite article is complete, avoiding the before-mentioned separation of article from mould.

In an embodiment of the present invention a moisture vapour permeable, liquid impervious composite layered structure can be provided wherein the contribution of the layer formed from the thermoplastic hydrophilic polymeric composition of the present invention to the overall performance of the composite material can only reside in the provision of a breathable liquid barrier and hence could be advantageously provided as thinly as possible. The remaining performance physical criterion is then preferably provided by the provided substrate, that therefore preferably acts also as a support layer.

The substrate, or support layer may be any useful layer which is preferably also moisture vapour permeable, preferably having a moisture vapour permeability of at least 100 g/m²·24h, more preferably at least 300 g/m²·24h, and most preferably at least 500 g/m²·24h.

Suitable substrates for use herein as support layers include two dimensional, planar micro and macro-porous films; macroscopically expanded films; formed apertured films; nonwoven and woven layers. According to the present invention the apertures in said layer may be of any configuration, but are preferably spherical or oblong and may also be of varying dimensions. The apertures preferably are evenly distributed across the entire surface of the layer, however layers having only certain regions of the surface having apertures are also envisioned.

Suitable two dimensional porous planar layers may be made of any material known in the art, but are preferably manufactured from commonly available polymeric materials. Suitable materials are for example Goretex™ or Sympatex™ type materials well known in the art for their application in so-called breathable clothing. Other suitable materials include XMP-1001 of Minnesota Mining and Manufacturing Company, St. Paul, Minnesota, USA and Exxaire XBF-101W, supplied by the Exxon Chemical Company. As used herein the term two dimensional planar layer refers to layers having a depth of less than 1 mm, preferably less than 0.5 mm, wherein the apertures have an average uniform diameter along their length and which do not protrude out of the plane of the layer. The apertured materials for use in the present invention may be produced using any of the methods known in the art such as described in EPO 293 482 and the references therein.

Suitable apertured formed films include films which have discrete apertures which extend beyond the horizontal plane of the surface of the layer thereby forming protuberances. The protuberances have an orifice located at its terminating end. Preferably said protuberances are of a funnel shape, similar to those described in US 3,929,135. The apertures located within the plane and the orifices located at the terminating end of protuberance themselves maybe circular or non circular provided the cross sectional dimension or area of the orifice at the termination of the protuberance is smaller than the cross sectional dimension or area of the aperture located within the surface of the layer. Preferably said apertured preformed films are unidirectional such that they have at least substantially, if not complete one directional fluid transport.

Suitable macroscopically expanded films for use herein include films as described in for example in US 4,637,819 and US 4,591,523.

Preferred support layers for use herein include woven and nonwoven layers, most preferably hydrophobic fibrous layers such as hydrophobic nonwovens.

Most substrates mentioned above for the manufacture of composite layered breathable structures comprising the thermoplastic hydrophilic polymeric compositions of the present invention are made of polymers with a rather or very poor polar character, and therefore take particular advantage of the increased adhesiveness combined with high breathability of the thermoplastic hydrophilic polymeric compositions of the present invention.

The composite layered structures of this preferred embodiment of the present invention are particularly advantageous as they allow the possibility of providing a composite wherein the thermoplastic composition may be formed onto the support substrate as a layer with the desired thickness. By e.g. suitably tailoring the viscosity of the thermoplastic hydrophilic polymeric composition at the process conditions as explained above, typical coating conditions and apparatuses known in the art for the direct coating of low viscosities hot melts can be readily utilised in order to provide the thermoplastic hydrophilic polymeric composition at the desired thickness onto the substrate. Alternatively, other known processes such as film extrusion can be used in case of thermoplastic hydrophilic polymeric compositions according to the present invention having a higher viscosity at the process conditions.

A possible method for forming a composite laminate by coating the thermoplastic composition onto a substrate acting as a support layer is described in PCT application WO 96/25902.

The thermoplastic hydrophilic polymeric compositions for making moisture vapour permeable, liquid impermeable structures according to the present invention have been so far described as being provided with the desired adhesiveness or tackiness typically in the molten, semi-molten, or plastic state. This is desired in a preferred embodiment of the present invention in order to form e.g. more stable moisture vapour permeable, liquid impermeable layered composite structures with the thermoplastic hydrophilic polymeric composition directly formed as a layer or film onto a suitable substrate, for example substrates having a very low polar character such as preferred nonwovens comprising hydrophobic fibres, wherein said increased adhesiveness to a substrate is not achieved to the detriment of the moisture vapour permeability of the resulting layer or film.

However, the thermoplastic hydrophilic polymeric compositions of the present invention can also be formulated in order to have pressure sensitive adhesive character, i.e. such that the thermoplastic hydrophilic polymeric composition remains tacky at any temperature. They can be therefore particularly useful also in all those applications where a continuous, moisture vapour permeable, liquid impermeable adhesive layer is needed, e.g. as construction adhesives in disposable absorbent articles, or alternatively in adhesives for securing said disposable absorbent articles to garments or to the body, in breathable adhesive tapes, etc.

The thermoplastic hydrophilic polymeric compositions of the present invention and the moisture vapour permeable, liquid impervious structures, e.g. layers and composites formed therefrom find utility in a number of applications wherein liquid imperviousness and moisture vapour permeability are desirable. In particular the present invention can be effectively utilised within absorbent articles such as diapers, sanitary napkins, panty liners, incontinence products and breast pads; perspiration pads such as underarm-, wrist- and head perspiration pads, collar inserts, shoe inserts, hat bands; protecting bedding covers such as mattress and pillow covers, protective clothing and the like.

Other articles comprising the thermoplastic hydrophilic polymeric compositions of the present invention, also comprise hand coverings such as gloves, finger cots, mitts, mittens; foot or leg coverings such as socks, hose, pantyhose, shoes, slippers; head coverings such as hats, caps; prophylactic articles such as condoms, semen shields internally placed inside the vaginal cavity; face coverings such as face masks, nose covers, ear covers or mitts; body support items such as male organ "athletic" supporters, brassieres; formed clothing for use as underwear, protective sleeves, or as a part of or wholly incorporated into protective pads. Other example articles and applications include but are not limited to: flexible or drapable clothing articles for humans or other living creatures such as the non-limiting examples of shirts, pants, undergarments, bibs, smocks, coats, scarves, body wraps, stockings, leggings, skirts, dresses, etc.; other flexible or drapable clothing for various tasks and occupations including medical professions, agricultural jobs, mechanical assembly and repair, emergency public services, the military, athletic endeavours, cleaning positions, etc.

Another example category of use involves packaging such as with food products such as fresh produce and baked goods (bread, rolls, cakes) as non-limiting examples.

A further example category of use involves agriculture and horticulture such as, as non-limiting examples, an individual article (container, three dimensional "bag") which is placed to partially or totally enclose an individual or specific group of plants.

An even further example category of use involves protective furniture coverings such as protective covers for upholstered chairs and sofas, etc., or also protective waterproof but breathable materials for roofing, tents, etc.

Articles comprising the thermoplastic hydrophilic polymeric compositions of the present invention can be generally flexible or rigid.

All such articles can also be typically disposable. Preferably the moisture vapour permeable, liquid impervious structures, e.g. layers and composites, formed from the thermoplastic compositions of the present invention have an overall moisture vapour transfer rate of at least 300 g/m²·24h, and preferably at least 500 g/m²·24h.

A moisture vapour permeable, liquid impervious composite structure formed by forming the thermoplastic polymeric hydrophilic composition of the present invention onto a suitable substrate finds particular utility as the backsheet for disposable absorbent articles, especially sanitary napkins and panty liners, but also diapers, incontinence products and breast pads. Such articles will typically comprise components known to the skilled person such as a liquid pervious topsheet, an absorbent core and a backsheet and may optionally also comprise other components such as fastening means, wings, and the like.

The preferred hydrophilic tackifying resins according to the present invention can also be added to thermoplastic polymers which are not intrinsically moisture vapour permeable, such as polyolefins, e.g. polyethylene or polypropylene, or styrenic block copolymers, which are all substantially both moisture vapour and liquid impervious, non-hydrophilic polymers, in order to provide the final thermoplastic composition with a certain degree of moisture vapour permeability.

### Example 1

The water vapour transmission rate (WVTR) of a sample according to the present invention and of two comparative samples were measured with the modified ASTM E-96 "Upright Cup" method, and shown in Table la below.

The samples were all obtained by known means by compounding three different thermoplastic polymeric compositions according to Table I below and by melt extruding each of them in a continuous film having a thickness of 40 µm.

Raw materials used in the compositions were a polyether-amide block copolymer available from Atofina (France) and commercialised under the trade name Pebax 2533 as the thermoplastic hydrophilic polymer; Triethyl Citrate available from Aldrich Co. as the compatible plasticiser; a tackifying resin available from Hercules Inc. and sold under the tradename Foral 85-E; a tackifying resin according to the present invention produced by Hercules Inc. and available under the code Res A-2691; Irganox 1010 available from Ciba-Geigy as an anti-oxidant agent.

Components and percentages of the compositions used for the three samples are shown in Table I below.

The equilibrium contact angle with water, measured according to the Equilibrium Contact Angle Measuring Test method described herein, is 88.3 degrees for the prior art resin Foral 85-E, and of 81 degrees for the resin Res A-2691 according to the present invention.

**Table I -**

| all percentages are in weight percent of the thermoplastic composition. | | | |
|---|---|---|---|
| Sample | 1 | 2 | 3 |
| Pebax 2533 | 34.8% | 34.8% | 49.8% |
| Triethyl Citrate | 34.8% | 34.8% | 49.8% |
| Foral 85-E | | 30% | |
| Res A-2691 | 30% | | |
| Irganox 1010 | 0.4% | 0.4% | 0.4% |

**Table Ia**

| | WVTR (g/m²·24h) |
|---|---|
| Sample 1 | 1357 |
| Sample 2 | 192 |
| Sample 3 | 2050 |

As shown in Table la, the film formed from the thermoplastic hydrophilic polymeric composition according to the present invention (Sample 1) shows a value of the water vapour transmission rate which is more than six times higher than the value of a similar film formed from the composition comprising a tackifying resin of the prior art (Sample 2). The water vapour transmission rate of a film (Sample 3) formed from a composition comprising only the hydrophilic polymer and the plasticiser of Samples 1 and 2, in the same 50/50 ratio, is also shown in Table la.

A comparison of the WVTR values of Samples 1 and 2 with the corresponding value of Sample 3 shows that the presence of a prior art tackifyer resin in the thermoplastic hydrophilic polymeric composition dramatically reduces the water vapour transmission rate as compared to a film made from the corresponding composition not comprising the tackifying resin (Samples 2 and 3).

On the contrary, Sample 1 comprising the tackifying resin according to the present invention maintains more than 66% of the water vapour transmission rate of the corresponding composition not comprising the tackifying resin (Sample 3).

### Example 2

Example 2 compares the water vapour transmission rate (WVTR, measured according to the same test method mentioned for Example 1) of two samples made of a composition comprising a same thermoplastic hydrophilic polymer, and a fixed amount of a tackifying resin, namely a tackifying resin according to the present invention in Sample 5, and a prior art tackifying resin in Sample 6, with the WVTR of a sample made of a composition comprising only the thermoplastic hydrophilic polymer (Sample 4). Each composition also comprises a fixed amount of an anti-oxidant compound (Irganox 1010).

The samples were obtained as already explained in Example 1 by compounding the respective thermoplastic hydrophilic polymeric compositions and by melt extruding each of them in a continuous film having the same thickness of 50 µm.

Table II below shows the specific components with respective percentages of the thermoplastic hydrophilic polymeric compositions use for Samples 4, 5, and 6, and the respective values for the WVTR of the films made therefrom. The single components and their availability have been already referred to in Example 1 above.

**Table II -**

| all percentages are in weight percent of the thermoplastic composition. | | | |
|---|---|---|---|
| Sample | 4 | 5 | 6 |
| Pebax 2533 | 99.6% | 69.8% | 69.8% |
| Foral 85-E | - | - | 29.8% |
| Res A-2691 | - | 29.8% | - |
| Irganox 1010 | 0.4% | 0.4% | 0.4% |
| WVTR (g/m²·24h) | 987 | 531 | 351 |

Table II shows that the film made of the thermoplastic hydrophilic polymeric composition according to the present invention (Sample 5), maintains almost 54% of the WVTR of a film having the same thickness and made only of the pure hydrophilic polymer (Sample 4), wherein the film made of a prior art composition (Sample 6), only maintains about 35% of the WVTR of the film made of the pure polymer.

### Example 3

A moisture vapour permeable, liquid impervious composite layered structure according to the present invention is described as Example 3.

A polyether-amide block copolymer available from Atofina (France) and commercialised under the trade name Pebax 2533 SN is compounded with Tri Butyl Citrate (plasticiser) available from Aldrich Co., a blend of two hydrophilic tackifying resins available from Herculeslnc. under the codes Res A-2691 and Res A-2690, and Irganox 1010 (anti oxidant agent) available from Ciba-Geigy.

The final formulation in percent by weight has the following composition:

| | |
|---|---|
| 44% | Pebax 2533 SN |
| 25% | Tri Butyl Citrate |
| 15% | Res A-2691 |
| 15% | Res A-2690 |
| 1% | Irganox 1010 |

The thermoplastic composition is directly coated onto a fibrous substrate in a continuous film having a basis weight of 20 g/m² by a hot melt coating process. The fibrous substrate is an SMS (Spunbonded-Meltblown-Spunbonded structure) hydrophobic 100% polypropylene nonwoven with a basis weight of 25 g/m² (support layer), available form Corovin - BBA Nonwovens Group (Germany) under the trade name MD3000. The composite, moisture vapour permeable, liquid impermeable layered structure has an overall thickness of 230 µm and a WVTR of 846 g/m²·24h.

### Test methods

According to the present invention the complex viscosity η* is measured using a Rheometer RDA-II available from Rheometrics Co. Moisture vapour permeability is measured as Water Vapour Transmission Rate (WVTR) at 25°C and 55% relative humidity according to the modified ASTM E-96 "Upright Cup" method. The only modification to the standard ASTM E-96 "Upright Cup" method consists in a change in the height of the air gap between the sample and the water surface in the cup, which height is 3 mm ± 0.5 mm, instead of 19 mm ± 2.5 mm, as specified in the standard test method.

### Equilibrium Contact Angle Measuring Test

The test method, which will be described hereinafter, is intended to measure the equilibrium contact angle with water of a tackifying resin intended to be comprised in a thermoplastic hydrophilic polymeric composition according to the present invention. As it is known in the art, the contact angle is a measure of the phenomenon of wetting or non-wetting of a solid by a liquid. The equilibrium contact angle is measured on a drop of liquid resting in equilibrium on the surface of a substance, wherein the surface is horizontal. The angle between the baseline of the drop and the tangent at the drop boundary is measured.

### Apparatus

Climatically controlled laboratory maintained at 25°C and 55% relative humidity.

Drop Shape Analysis System DSA 10 equipped with the Video Measuring System DSA 1 and DSA-Software Version 1.5 For Windows '95 NT.

Dosing unit G1023 with G1060 1 ml syringe and G1061 needle (having a length of 30 mm and a diameter of 0.5 mm).

Microscope glass slides 10 mm x 30 mm.

Conditioning oven.

The system DSA 10 and the accessories DSA 1 with DSA-Software, G1023, G1060, G1061 are sold by Krüss GmbH, D 22453 Hamburg.

Preparation of the samples and contact angle measurements as described below are conducted in the climatically controlled laboratory.

### Sample preparation

The preparation of the samples of the resins for the measurement of the equilibrium contact angle with water comprises the following steps:
1. prepare a 10% by weight solution of the resin in a suitable organic solvent. The high dilution provides a solution with a very low viscosity. A suitable solvent must be selected which dissolves the tackifying resins to be used in the context of the present invention, and which also promptly evaporates. A suitable solvent must therefore have a boiling point at atmospheric pressure not greater than 100°C, preferably not greater than 80°C. Tetrahydrofuran has been selected as a particularly suitable solvent according to the present test method;
2. completely dip a clean microscope glass slide (previously thoroughly cleaned with methanol and dried) into the solution;
3. remove the glass slide slowly from the solution and keep it vertical for about 10 seconds to obtain a uniform coating on both surfaces; the solvent almost immediately evaporates and leaves onto the glass surfaces a very thin, continuous layer of the resin having a uniform thickness and a smooth surface; samples which do not possess these features at a visual examination must be discarded;
4. let the sample dry at air for about ten minutes without touching the surfaces;
5. place the sample in the conditioning oven for at least 12 h at a temperature of 40°C and 85% relative humidity;
6. remove the sample from the conditioning oven and leave it cool in the climatic laboratory for about 20 minutes, until it reaches the room temperature of 25°C;
7. measure the equilibrium contact angle; it is not relevant on which side of the glass slide the contact angle measurement is actually performed, provided onto the selected side of the slide the resin coating is uniform and with a smooth surface, as explained under step (3).

### Contact angle measurement

Contact angle measurements are performed with the Drop Shape Analysis System DSA 10 equipped with the Video Measuring System DSA 1 with the DSA-Software, and the Dosing Unit G1023 with G1060 syringe and G1061 needle.

Liquid is distilled water used for HPLC (High Performance Liquid Chromatography).

Measurements of equilibrium contact angle are conducted according to the standard usage instructions provided with the DSA10 system comprising the respective accessories listed above.

The measurements are performed at air and at room conditions, i.e. at 25°C and 55% relative humidity. The samples are positioned following the usage instructions onto the sample stage of the DSA 10 system.

The surface of the sample to be measured shall be horizontal.

A drop of water is positioned on the surface of the sample by means of the syringe G1060 with the G1061 needle. The drop volume has to be duly controlled by means of the micrometer dosing screw of the syringe such that the drop diameter ranges between 1÷2 mm. Within this range the contact angle is independent of the drop size.

The measurements of the equilibrium contact angle are conducted automatically by the Drop Shape Analysis System DSA 10 with the Video Measuring System DSA 1 and the DSA-Software. The Video Measuring System records a movie sequence of the drop positioned onto the sample surface, and the measurement is actually performed on the first frame in which the drop stands still on the surface of the sample in order to have the equilibrium contact angle.

For each sample, from five to seven different measurements are performed on different points of the surface. The highest and the lowest values obtained are discarded, and the remaining values are averaged, to ensure a representative equilibrium contact angle value to be determined for each sample under investigation.

The very thin layer of resin formed onto the glass slide according to the described sample preparation procedure, provides for an effective and reliable measurement of the equilibrium contact angle with water not only for resins which are solid at room temperature, but also for resins which are liquid at room temperature, wherein "solid" and "liquid" at room temperature are to be intended according to the definition previously given in the description. In the latter case in fact the glass slide provides the very thin resin layer of the sample with an effective support, and avoids any detrimental effect which might be caused by the higher density of the water with respect to the resin. In other words, the combined effect of the very thin resin layer supported by the glass substrate, and of the very short time (few seconds) needed for the automatic measuring of the equilibrium contact angle after the drop has been positioned onto the sample surface, prevents any possible deformation of the horizontal and flat resin surface itself under the weight of the drop of water, and therefore provides for a correct equilibrium contact angle measurement.

## Claims

1. A thermoplastic hydrophilic polymeric composition comprising:
a thermoplastic hydrophilic polymer or a mixture of thermoplastic hydrophilic polymers, said thermoplastic hydrophilic polymer, or alternatively each of said thermoplastic hydrophilic polymers of said mixture selected from the group consisting of polyurethanes, poly-ether-amides block copolymers, polyethylene-acrylic acid and polyethylene-methacrylic acid copolymers, polyethylene oxide and its copolymers, ethylene acrylic esters and ethylene methacrylic esters copolymers, poly lactide and copolymers, polyamides, polyesters and copolyesters, polyester block copolymers, sulfonated polyesters, poly-ether-ester block copolymers, poly-ether-ester-amide block copolymers, polyacrylates, polyacrylic acids and derivatives, ionomers, polyethylene-vinyl acetate with a vinyl acetate content of more than 28% by weight, polyvinyl alcohol and its copolymers, polyvinyl ethers and their copolymers, poly-2-ethyl-oxazoline and derivatives, polyvinyl pyrrolidone and its copolymers, thermoplastic cellulose derivatives, poly-caprolactone and copolymers, poly glycolide, polyglycolic acid and copolymers, polylactic acid and copolymers, polyureas, or mixtures thereof, and either
a compatible hydrophilic tackifying resin having an equilibrium contact angle with water not greater than 86 degrees, preferably not greater than 84 degrees, more preferably not greater than 82 degrees, as measured according to the Equilibrium Contact Angle Measuring Test described herein, or alternatively
a blend of compatible hydrophilic tackifying resins, said blend of compatible hydrophilic tackifying resins comprising at least 50% by weight of a tackifying resin or resins having an equilibrium contact angle with water not greater than 86 degrees, preferably not greater than 84 degrees, more preferably not greater than 82 degrees, as measured according to the Equilibrium Contact Angle Measuring Test described herein.

2. A thermoplastic hydrophilic polymeric composition according to claim 1, wherein each hydrophilic tackifying resin of said blend of hydrophilic tackifying resins has an equilibrium contact angle with water not greater than 86 degrees, preferably not greater than 84 degrees, more preferably not greater than 82 degrees, as measured according to the Equilibrium Contact Angle Measuring Test described herein.

3. A thermoplastic hydrophilic polymeric composition according to any preceding claim, wherein said thermoplastic hydrophilic polymer or said mixture of thermoplastic hydrophilic polymers comprises thermoplastic poly-ether-amide block copolymers, thermoplastic poly-ether-ester-amide block copolymers, thermoplastic polyester block copolymers, thermoplastic polyurethanes, or mixtures thereof.

4. A thermoplastic hydrophilic polymeric composition according to any preceding claim, said thermoplastic hydrophilic composition further comprising a suitable compatible plasticiser, or a blend of suitable compatible plasticisers, wherein said suitable compatible plasticiser, or alternatively each plasticiser of said blend of suitable compatible plasticisers is selected from the group consisting of citric acid esters, tartaric acid esters, glycerol and its esters, sucrose esters, adipates, sebacates, sorbitol, epoxidized vegetal oils, polymerised vegetal oils, polyols, phthalates, liquid polyesters, glycolates, p-toluene sulfonamide and derivatives, glycols and polyglycols and their derivatives, sorbitan esters, phosphates, monocarboxylic fatty acids (C₈-C₂₂) and their derivatives, and mixtures thereof.

5. A thermoplastic hydrophilic polymeric composition according to claim 3, wherein said suitable compatible plasticiser or said mixture of suitable compatible plasticisers comprises citric acid esters, tartaric acid esters, glycerol and its esters, sorbitol, glycolates, and mixtures thereof.

6. A thermoplastic hydrophilic polymeric composition according to any preceding claim, wherein said thermoplastic hydrophilic polymeric composition comprises:
from 10% to 99%, preferably from 20% to 70%, more preferably from 30% to 50%, by weight of said thermoplastic hydrophilic composition, of said thermoplastic hydrophilic polymer or mixture of thermoplastic hydrophilic polymers,
from 1% to 90%, preferably from 10% to 70%, more preferably from 20% to 50%, by weight of said thermoplastic polymeric hydrophilic composition, of said compatible hydrophilic tackifying resin, or blend of compatible hydrophilic tackifying resins, and
from 0% to 95%, preferably from 10% to 70%, more preferably from 20% to 50%, by weight of said thermoplastic polymeric hydrophilic composition, of said suitable compatible plasticiser, or blend of suitable compatible plasticisers.

7. A thermoplastic hydrophilic polymeric composition according to any preceding claim, said thermoplastic hydrophilic polymeric composition comprising 70% by weight of one of said thermoplastic hydrophilic polymers, and 30% by weight of one of said hydrophilic tackifying resins, wherein said thermoplastic hydrophilic polymeric composition, when formed into a continuous film 50 µm thick, allows a water vapour transmission rate (WVTR) of said film which is at least 40%, preferably at least 50%, more preferably at least 60%, of the water vapour transmission rate (WVTR) of a continuos film having the same thickness of 50 µm, and formed by 100% by weight of said same thermoplastic hydrophilic polymer, said water vapour transmission rate measured according to the modified ASTM E-96 "Upright Cup" method.

8. A moisture vapour permeable layer formed from the thermoplastic hydrophilic polymeric composition of any of claims 1 to 6, wherein said layer is liquid impervious and has a water vapour transmission rate of (WVTR) of at least 400 g/m²·24h, preferably of at least 500 g/m²·24h, more preferably of at least 600 g/m²·24h, most preferably of at least 1000 g/m²·24h, with a thickness of said layer of at least 40 µm, and wherein said thermoplastic hydrophilic polymeric composition comprises at least 30% by weight of said hydrophilic tackifying resin, or of said blend of hydrophilic tackifying resins, said water vapour transmission rate measured according to the modified ASTM E-96 "Upright Cup" method.

9. A moisture vapour permeable, liquid impervious layered structure comprising the layer of claim 8 bonded to a substrate, said substrate being moisture vapour permeable.

10. An absorbent article comprising a moisture vapour permeable, liquid impervious layer or layered structure according to claims 8 or 9.
